(19) Europäisches Patentamt / European Patent Office / Office européen des brevets

(11) **EP 3 714 399 B1**

(12) **FASCICULE DE BREVET EUROPEEN**

(45) Date de publication et mention de la délivrance du brevet:
**30.04.2025 Bulletin 2025/18**

(21) Numéro de dépôt: **19820789.6**

(22) Date de dépôt: **18.12.2019**

(51) Classification Internationale des Brevets (IPC):
**G06V 10/764** *(2022.01)* **G06V 10/82** *(2022.01)*
**G06F 18/2413** *(2023.01)*

(52) Classification Coopérative des Brevets (CPC):
**G02B 27/4294; G01J 3/0229; G01J 3/18; G01J 3/28; G01J 3/2823; G02B 27/46; G06F 18/2413; G06N 3/045; G06N 3/048; G06N 3/08; G06V 10/764; G06V 10/82;** G06V 10/58; G06V 20/194

(86) Numéro de dépôt international:
**PCT/EP2019/085847**

(87) Numéro de publication internationale:
**WO 2020/127422 (25.06.2020 Gazette 2020/26)**

(54) **DISPOSITIF DE DÉTECTION HYPERSPECTRALE**

VORRICHTUNG ZUR HYPERSPEKTRALEN DETEKTION

HYPERSPECTRAL DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2018 FR 1873313**
**07.02.2019 FR 1901202**
**04.06.2019 FR 1905916**

(43) Date de publication de la demande:
**30.09.2020 Bulletin 2020/40**

(73) Titulaire: **CARBON BEE**
**26000 Valence (FR)**

(72) Inventeur: **GERMAIN, Gérald**
**26350 Crépol (FR)**

(74) Mandataire: **Fidal Innovation**
**4-6 avenue d'Alsace**
**92400 Courbevoie (FR)**

(56) Documents cités:
- **XIONG ZHIWEI ET AL: "HSCNN: CNN-Based Hyperspectral Image Recovery from Spectrally Undersampled Projections", 2017 IEEE INTERNATIONAL CONFERENCE ON COMPUTER VISION WORKSHOPS (ICCVW), IEEE, 22 October 2017 (2017-10-22), pages 518 - 525, XP033303494, DOI: 10.1109/ICCVW.2017.68**
- **WANG CHEN ET AL: "Deep Residual Convolutional Neural Network for Hyperspectral Image Super-Resolution", 30 December 2017, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, ISBN: 978-3-642-17318-9, XP047459501**
- **XIONG ZHIWEI ET AL: "HSCNN: CNN-Based Hyperspectral Image Recovery from Spectrally Undersampled Projections", 2017 IEEE INTERNATIONAL CONFERENCE ON COMPUTER VISION WORKSHOPS (ICCVW), IEEE, 22 October 2017 (2017-10-22), pages 518 - 525, XP033303494, DOI: 10.1109/ICCVW.2017.68**

- WANG CHEN ET AL: "Deep Residual Convolutional Neural Network for Hyperspectral Image Super-Resolution", 30 December 2017, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 370 - 380, ISBN: 978-3-642-17318-9, XP047459501
- LAURA GALVIS ET AL: "Coded aperture design in compressive spectral imaging based on side information", APPLIED OPTICS, vol. 56, no. 22, 1 August 2017 (2017-08-01), pages 6332, XP055653512, ISSN: 1559-128X, DOI: 10.1364/AO.56.006332
- HE MINGYI ET AL: "Multi-scale 3D deep convolutional neural network for hyperspectral image classification", 2017 IEEE INTERNATIONAL CONFERENCE ON IMAGE PROCESSING (ICIP), IEEE, 17 September 2017 (2017-09-17), pages 3904 - 3908, XP033323307, DOI: 10.1109/ICIP.2017.8297014
- QIANGQIANG YUAN ET AL: "Hyperspectral Image Denoising Employing a Spatial-Spectral Deep Residual Convolutional Neural Network", ARXIV.ORG, CORNELL UNIVERSITY LIBRARY, 201 OLIN LIBRARY CORNELL UNIVERSITY ITHACA, NY 14853, 1 June 2018 (2018-06-01), XP081182154, DOI: 10.1109/TGRS.2018.2865197
- CHEN YUSHI ET AL: "Deep Feature Extraction and Classification of Hyperspectral Images Based on Convolutional Neural Networks", IEEE TRANSACTIONS ON GEOSCIENCE AND REMOTE SENSING, IEEE SERVICE CENTER, PISCATAWAY, NJ, US, vol. 54, no. 10, 1 October 2016 (2016-10-01), pages 6232 - 6251, XP011619618, ISSN: 0196-2892, [retrieved on 20160811], DOI: 10.1109/TGRS.2016.2584107

## Description

DOMAINE TECHNIQUE

La présente invention se rapporte à un dispositif de détection de particularités dans le plan focal d'une scène basé sur une mesure utilisant un procédé de compression de la scène hyperspectrale en trois dimensions en une image non homogène en deux dimensions, et un traitement de l'image obtenue permettant de détecter les particularités recherchées dans la scène.

L'invention trouve une application particulièrement avantageuse pour les systèmes embarqués destinés à détecter des objets dans une scène à partir de leur forme, leur texture et leur réflectance lumineuse.

L'invention peut être appliquée à un grand nombre de domaines techniques dans lesquels une détection hyperspectrale est recherchée. De manière non exhaustive, l'invention peut être utilisée, par exemple, dans le domaine médical et dentaire, pour aider au diagnostic. Dans le domaine végétal et mycologique, l'invention peut également être utilisée pour réaliser du phénotypage, détecter des symptômes de stress ou maladie ou différencier des espèces. Dans le domaine de l'analyse chimique, l'invention peut tout autant être utilisée pour mesurer les concentrations. Dans le domaine de la lutte contre la contrefaçon, l'invention peut être utilisée pour discerner une contrefaçon.

ART ANTERIEUR

Au sens de l'invention, une détection à acquisition hyperspectrale correspond à la détection de particularités dans le plan focal d'une scène depuis une image en deux dimensions acquise contenant une représentation des informations spatiales et spectrales du plan focal de la scène.

Différentes méthodes de compression du plan focal d'une scène hyperspectrale sont décrites dans la littérature. L'objet de ces méthodes est d'acquérir le plan focal de la scène hyperspectrale en une seule acquisition sans nécessité de balayer le plan focal de la scène dans les dimensions spatiales ou spectrale.

Par exemple, la thèse « Non-scanning imaging spectrometry », Descour, Michael Robert, 1994, The university of Arizona, propose une façon d'acquérir une seule image en deux dimensions de la scène observée contenant toutes les informations pour différentes longueurs d'onde. Cette méthode, dénommée CTIS (pour « Computed-Tomography Imaging Spectrometer »), propose de capturer une image diffractée du plan focal de la scène observée au moyen d'un réseau de diffraction disposé en amont d'un capteur numérique. Cette image diffractée acquise par le capteur numérique prend la forme de multiples projections. Chaque projection permet de représenter le plan focal de la scène observée et contient l'ensemble des informations spectrales du plan focal.

Une autre méthode, dénommée CASSI (pour « Coded Aperture Snapshot Spectral Imaging »), décrite dans la thèse « Compressive spectral imaging », D. Kittle, 2010, propose une façon d'acquérir une seule image encodée en deux dimensions contenant toutes les informations spatiales et spectrales. Cette méthode, propose de capturer une image diffractée, au moyen d'un prisme de diffraction, et encodée, au moyen d'un masque d'encodage, du plan focal de la scène observée.

Ces méthodes, bien que satisfaisantes pour résoudre la problématique d'acquisition instantanée du plan focal de la scène hyperspectrale, nécessitent des algorithmes complexes et coûteux en ressources de calcul afin d'estimer la scène hyperspectrale non compressée. La publication « Review of snapshot spectral imaging technologies », Nathan Hagen, Michael W. Kudenov, Optical Engineering 52(9), September 2013, présente une comparaison des méthodes d'acquisition hyperspectrales ainsi que les complexités algorithmiques associées à chacune d'elles. Les publications He Mingyi et al., « Multi-scale 3D deep convolutional neural network for hyperspectral image classification », 2017 IEEE International Conference on Image processing, IEEE, 17 septembre 2017, pp. 3904-3908, Chen Yushi et al., « Deep feature extraction and classification of hyperspectral images based on Convolutional neural networks », IEEE transactions on Geoscience and remote sensing, IEEE Service Center, col. 54, no. 10, 1er octobre 2016, pp. 6232-6251, et Qiangqiang Yuan et al., « hyperspectral image denoising employing a spatial-spectral deep residual convolutional neural network », Cornell University Library, 1er juin 2018, Xiong Zhiwei et al. « HSCNN : CNN-Based hyperspectral image recovery from spectrally undersampled projections », 2017 IEEE International Conference on Computer Vision Workshops (ICCVW, IEEE, 22 octobre 2017, pp. 518-525 et Wang Chen et al. "Deep residual Convolutional Neural Network for Hyperspectral Image Super-resolution", 30 décembre 2017, International conference on financial cryptography and data security, Springer Berlin, Heidelberg, pp. 370-380 sont des exemples de telles publications.

En effet, la méthode CTIS nécessite un processus d'estimation basé sur une matrice en deux dimensions représentant la fonction de transfert de l'optique de diffraction. Cette matrice doit être inversée pour reconstituer l'image hyperspectrale. La matrice de la fonction de transfert n'étant pas complètement définie, des méthodes d'inversion matricielle itératives et coûteuses en ressources de calcul permettent d'approcher le résultat pas à pas.

La méthode CASSI et ses dérivées nécessitent également des calculs matriciels non complètement définis, et utilisent des méthodes de calcul itératives et coûteuses en ressources de calcul afin d'approcher le résultat.

En outre, l'image hyperspectrale en trois dimensions reconstruite par ces méthodes de calcul ne contient pas d'informations spatiales ou spectrale supplémentaires par rapport à l'image compressée en deux dimensions obtenue par ces méthodes d'acquisitions. L'estimation par le calcul de l'image hyperspectrale en trois dimensions n'est donc pas nécessaire pour une détection directe des particularités recherchées dans le plan focal de la scène.

Des méthodes de traitement d'image dans l'objectif de détecter des particularités sont largement décrites dans la littérature scientifique. Par exemple une méthode basée sur des réseaux de neurones est décrite dans « auto-association by multilayer perceptrons and singular value decomposition. » Biological cybernetics, 59(4):291-294, 1988. ISSN 0340-1200, H. Bourlard and Y. Kamp. A.

De nouvelles méthodes basées sur des réseaux de neurones profonds et convolutifs sont également largement employées avec des résultats présentant des taux de fausses détections très bas. Par exemple, une telle méthode est décrite dans « Stacked Autoencoders Using Low-Power Accelerated Architectures for Object Recognition in Autonomous Systems », Neural Processing Letters, vol. 43, no. 2, pp. 445-458,2016, J. Maria, J. Amaro, G. Falcao, L. A. Alexandre.

Ces méthodes sont particulièrement adaptées à détecter des éléments dans une image couleur (possédant généralement 3 canaux - Rouge, Vert et Bleu) d'une scène en prenant en compte les caractéristiques de formes, de textures et de couleurs de la particularité à détecter. Ces méthodes considèrent l'image homogène, et traitent par convolution l'entièreté de l'image par le même procédé.

Le traitement des images compressées en deux dimensions obtenues par les méthodes CTIS et CASSI ne peut donc pas être opéré au moyen d'un réseau de neurones profond et convolutif standard. En effet, l'image obtenue par ces méthodes n'est pas homogène, et contient des particularités non linéaires dans les dimensions soit spectrale, soit spatiales.

Le problème technique de l'invention consiste à détecter directement les particularités recherchés depuis l'acquisition d'au moins une représentation compressée, non homogène, et non linéaire en deux dimensions contenant toute l'information spatiale et spectrale d'une scène hyperspectrale en trois dimensions.

## EXPOSE DE L'INVENTION

La présente invention est définie dans le jeu de revendications exposé ci-après. La présente invention se propose de répondre à ce problème technique en détectant directement les particularités recherchées au moyen d'un réseau de neurones formels profond et convolutif, dont l'architecture est adaptée à une détection directe, appliqué sur une image compressée en deux dimensions d'une scène hyperspectrale en trois dimensions.

L'image hyperspectrale en trois dimensions ne contient pas plus d'information spatiales et spectrale que l'image compressée obtenue par les méthodes d'acquisition CTIS ou CASSI puisque l'image hyperspectrale en trois dimensions est reconstituée à partir de l'image compressée. Ainsi l'invention propose de détecter directement dans l'image compressée les particularités recherchées dans le plan focal d'une scène.

A cet effet, l'invention concerne un dispositif de détection de particularités dans une scène hyperspectrale.

L'invention se caractérise en ce que le dispositif comporte un système de détection directe de particularités dans ladite scène hyperspectrale qui intègre un réseau de neurones profond et convolutif architecturé pour détecter la ou les particularités recherchées dans ladite scène hyperspectrale depuis l'au moins une image compressée de la scène hyperspectrale.

En pratique, contrairement à l'état de l'art classique de la méthode CTIS, l'invention permet de détecter des particularités dans ladite scène hyperspectrale en temps réel entre deux acquisitions du plan focal hyperspectral de la scène observée. Ce faisant, il n'est plus nécessaire de différer le traitement des images compressées et il n'est plus nécessaire de stocker ces images compressées après la détection. Également il n'est plus nécessaire de reconstituer l'image hyperspectrale en trois dimensions avant d'appliquer la méthode de détection.

En variante, l'image compressée obtenue par le système optique contient le plan focal diffracté et encodé suivant le schéma de codage d'un masque introduit dans le chemin optique avant diffraction de la scène. Ainsi, le réseau de neurones utilise, pour la détection directe des particularités recherchées, les informations suivantes :

- le schéma du masque d'encodage utilisé pour encoder les diffractions du plan focal de la scène ; et
- des intensités lumineuses dans l'image compressée et diffractée- dont les coordonnées x' et y' sont dépendantes des coordonnées x et y du plan focal de la scène observée.

En pratique, contrairement à l'état de l'art classique de la méthode CASSI, l'invention permet de détecter des particularités dans une scène hyperspectrale en temps réel entre deux acquisitions du plan focal hyperspectral de la scène observée. Ce faisant, il n'est plus nécessaire de différer le traitement des images compressées et il n'est plus nécessaire de stocker ces images compressées après la détection. Également il n'est plus nécessaire de reconstituer l'image hyperspectrale en trois dimensions avant d'appliquer la méthode de détection.

Selon un mode de réalisation, on prévoit un dispositif de capture d'une image d'une scène hyperspectrale et de détection de particularités dans cette scène hyperspectrale en trois dimensions comprenant en outre un système d'acquisition de l'au moins une image compressée de la scène hyperspectrale en trois dimensions.

Selon un mode de réalisation, le système d'acquisition comprend une réalisation mécanique compacte et intégrable dans un dispositif portable et autonome et le système de détection est inclus dans ledit dispositif portable et autonome.

Selon un mode de réalisation, le système d'acquisition comprend une réalisation mécanique compacte et intégrable devant l'objectif d'un appareil photographique d'un ordiphone et le système de détection est inclus dans l'ordiphone.

Selon un mode de réalisation, ladite au moins une image compressée est obtenue par un capteur infrarouge du système d'acquisition. Ce mode de réalisation permet d'obtenir une information invisible à l'oeil humain.

Selon un mode de réalisation, ladite image compressée est obtenue par un capteur du système d'acquisition dont la longueur d'onde est comprise entre 0,001 nanomètre et 10 nanomètres. Ce mode de réalisation permet d'obtenir une information sur les rayons X présents sur la scène observée.

Selon un mode de réalisation, ladite image compressée est obtenue par un capteur du système d'acquisition dont la longueur d'onde est comprise entre 10000 nanomètres et 20000 nanomètres. Ce mode de réalisation permet d'obtenir une information sur la température de la scène observée.

Selon un mode de réalisation, ladite au moins une image compressée est obtenue par un capteur du système d'acquisition dont la longueur d'onde est comprise entre 300 nanomètres et 2000 nanomètres. Ce mode de réalisation permet d'obtenir une information dans le domaine visible et invisible à l'œil humain.

Selon un mode de réalisation, ladite au moins une image compressée est obtenue par un capteur du système d'acquisition comportant :

- une première lentille convergente configurée pour focaliser les informations d'une scène sur une ouverture ;

- un collimateur configuré pour capter les rayons traversant ladite ouverture et pour transmettre ces rayons sur un réseau de diffraction ; et

- une seconde lentille convergente configurée pour focaliser les rayons issus du réseau de diffraction sur une surface de captation.

Ce mode de réalisation est particulièrement simple à réaliser et peut être adapté sur un capteur existant.

Selon un mode de réalisation, ladite au moins une image compressée est obtenue par un capteur du système d'acquisition comportant :

- une première lentille convergente configurée pour focaliser les informations d'une scène sur un masque ;

- un collimateur configuré pour capter les rayons traversant ledit masque et pour transmettre ces rayons sur un prisme ; et

- une seconde lentille convergente configurée pour focaliser les rayons issus du prisme sur une surface de captation.

Ce mode de réalisation est particulièrement simple à réaliser et peut être adapté sur un capteur existant.

En ce qui concerne la détection de particularités depuis ladite image compressée, l'invention utilise un réseau de neurones profond et convolutif architecturé pour calculer une probabilité de présence de la ou les particularités recherchées dans ladite scène hyperspectrale. Un apprentissage dudit réseau de neurones profond et convolutif permet d'indiquer la probabilité de présence des particularités recherchées pour chaque coordonnées x et y de ladite scène hyperspectrale. Par exemple, un apprentissage par rétro-propagation du gradient ou ses dérivés à partir de données d'apprentissage peut être utilisé.

Selon un mode de réalisation, le réseau de neurones est architecturé pour calculer une concentration chimique dans ladite scène hyperspectrale depuis l'image compressée.

Selon un mode de réalisation, une sortie du réseau de neurones est scalaire ou booléenne.

Selon un mode de réalisation, une couche de sortie du réseau de neurones comprend une couche CONV(u) où u est supérieur ou égale à 1 et correspond au nombre de particularités recherchées.

Le réseau de neurones profond et convolutif servant à la détection directe depuis l'image compressée a une structure de couche d'entrée adaptée à la détection directe. L'invention dispose de plusieurs architectures des couches profondes dudit réseau de neurones. Parmi celles-ci, une architecture auto-encodeuse telle que décrite dans le document « SegNet: A Deep Convolutional Encoder-Decoder Architecture for Image Segmentation », Vijay Badrinarayanan, Alex Kendall, Roberto Cipolla est adaptée en vue de permettre d'indiquer la probabilité de présence des particularités recherchées pour chaque coordonnées x et y de la scène hyperspectrale.

Ladite couche d'entrée du réseau de neurones est adaptée à la structure de l'image compressée obtenue par le moyen d'acquisition. Ainsi, la couche d'entrée est un tenseur d'ordre trois et possède deux dimensions spatiales de taille $X_{MAX}$ et $Y_{MAX}$, et une dimension de profondeur de taille $D_{MAX}$.

L'invention utilise la relation non linéaire f(xt, $y_t$, $d_t$) → ($x_{img}$, $y_{img}$) définie pour $x_t \in [0..X_{MAX}[$, $y_t \in [0..Y_{MAX}[$ et $d_t \in [0..D_{MAX}[$ permettant de calculer les coordonnées $x_{img}$ et $y_{img}$ du pixel de ladite image compressée dont l'intensité est copiée dans le tenseur d'ordre trois de ladite couche d'entrée du réseau de neurones aux coordonnées ($x_t$, $y_t$, $d_t$).

Selon un mode de réalisation, l'image compressée contient les diffractions de la scène hyperspectrale obtenue avec des filtres de diffraction. L'image compressée obtenue contient une portion d'image de la scène non diffractée, ainsi que les projections diffractées suivant les axes des différents filtres de diffraction. La couche d'entrée du réseau de neurones contient une copie des représentations chromatiques de la scène hyperspectrale de l'image compressée selon la relation non linéaire suivante :

$$f(x_t, y_t, d_t) = \begin{cases} x_{img} = x + x_{offsetX}(n) + \lambda . \lambda_{sliceX} \\ y_{img} = y + y_{offsetY}(n) + \lambda . \lambda_{sliceY} \end{cases}$$

avec :

n=floor(M($d_t$-1)/$D_{MAX}$) ;
$\lambda$=($d_t$-1) mod ($D_{MAX}$/M) ;
M le nombre de diffractions de l'image compressée ;
$d_t$ compris entre 1 et $D_{MAX}$, la profondeur de la couche d'entrée du réseau de neurones ;
$x_t$ compris entre 0 et $X_{MAX}$, la largeur de la couche d'entrée du réseau de neurones ;
$y_t$ compris entre 0 et $Y_{MAX}$, la longueur de la couche d'entrée du réseau de neurones ;
$X_{MAX}$ la taille selon l'axe x du tenseur d'ordre trois de la couche d'entrée ;
$Y_{MAX}$ la taille selon l'axe y du tenseur d'ordre trois de la couche d'entrée ;
$D_{MAX}$, la profondeur du tenseur d'ordre trois de ladite couche d'entrée ;
$\lambda_{sliceX}$, la constante du pas spectral du pixel selon l'axe x de ladite image compressée ;
$\lambda_{sliceY}$, la constante du pas spectral du pixel selon l'axe y de ladite image compressée ;
$x_{offsetX}$(n) correspondant au décalage suivant l'axe x de la diffraction n ;
$y_{offsetY}$(n) correspondant au décalage suivant l'axe y de la diffraction n.

Selon un mode de réalisation, l'image compressée contient une représentation en deux dimensions encodée de la scène hyperspectrale obtenue avec un masque et un prisme. L'image compressée obtenue contient une portion d'image de la scène diffractée et encodée. La couche d'entrée du réseau de neurone contient une copie de l'image compressée selon la relation non linéaire suivante : f($x_t$,$y_t$,$d_t$)={($x_{img}$=$x_t$) ;$y_{img}$=$y_t$)}(Img=MASK si $d_t$=0 ; Img=CASSI si dt>0),

avec :

$d_t$ compris entre 0 et $D_{MAX}$ ;

$x_t$ compris entre 0 et $X_{MAX}$ ;

$y_t$ compris entre 0 et $Y_{MAX}$ ;

$X_{MAX}$ la taille selon l'axe x du tenseur d'ordre trois de la couche d'entrée ;

$Y_{MAX}$ la taille selon l'axe y du tenseur d'ordre trois de la couche d'entrée ;

$D_{MAX}$, la profondeur du tenseur d'ordre trois de ladite couche d'entrée ;

MASK : image du masque de compression utilisé,

CASSI : image compressée mesurée,

Img : Image sélectionnée dont le pixel est copié.

Ces relations non linéaires permettent de rechercher rapidement l'intensité des pixels d'intérêts dans chaque diffraction. En effet, certains pixels peuvent être négligés si la longueur d'onde de l'image diffractée n'est pas significative.

L'architecture du réseau de neurones profond et convolutif est composé d'un encodeur permettant de rechercher les caractéristiques élémentaires propres à la détection souhaitée, suivi d'un décodeur permettant de générer une image de probabilités de présence des caractéristiques à détecter dans ladite image compressée du plan focal hyperspectral. La structure d'encodeur/décodeur permet de rechercher les caractéristiques élémentaires et propres à la caractéristique principale recherchée dans ledit plan focal hyperspectral.

Selon un mode de réalisation, l'encodeur est composé d'une succession de couches de neurones de convolution en alternance avec des couches de pooling (opérateur de décimation de la couche précédente) permettant de réduire la dimension spatiale.

Selon un mode de réalisation, le décodeur est composé d'une succession de couches de neurones de déconvolution en alternance avec des couches de unpooling (opération d'interpolation de la couche précédente) permettant une augmentation de la dimension spatiale.

Par exemple, une telle structure d'encodeur/décodeur est décrite dans « SegNet: A Deep Convolutional Encoder-Decoder Architecture for Image Segmentation », Vijay Badrinarayanan, Alex Kendall, Roberto Cipolla.

Selon un mode de réalisation, un ensemble de couches de neurones entièrement connectées peut être positionné entre l'encodeur et le décodeur.

Selon un mode de réalisation, le réseau de neurones convolutif est architecturé pour détecter la ou les particularités recherchées dans ladite scène hyperspectrale depuis l'ensemble desdites au moins une image compressée et d'au moins une image standard non-diffractée de la scène hyperspectrale.

L'invention permet ainsi de corréler les informations contenues dans les différentes diffractions de l'image compressée avec des informations contenues dans la partie centrale non-diffractées de l'image obtenue.

L'image compressée obtenue par le système optique contient le plan focal de la scène non diffractée au centre, ainsi que les projections diffractées suivant les axes des différents filtres de diffractions. Ainsi, le réseau de neurones utilise, pour la détection directe des particularités recherchées, les informations de ladite au moins une image diffractée suivantes

- l'intensité lumineuse dans la partie centrale et non-diffractée du plan focal de la scène aux coordonnées x et y ; et

- des intensités lumineuses dans chacune des diffractions de ladite image compressée dont les coordonnées x' et y' sont dépendantes des coordonnées x et y de la partie centrale non diffractée du plan focal de la scène.

Les ensembles d'images standards et images compressées sont ainsi fusionnées au moyen dudit réseau de neurones formels profond et convolutif en tenant compte des décalages de prises d'images des différentes sources optiques, et une détection directe desdites particularités recherchées est faite depuis l'information fusionnées au moyen de ce même réseau de neurones profond et convolutif.

Par exemple, une telle structure d'encodeurs fusionnant différentes images d'un même plan focal est décrit dans « Multimodal deep learning for robust rgb-d object recognition. In Intelligent Robots and Systems (IROS) », Eitel, A., Springenberg, J. T., Spinello, L., Riedmiller, M., and Burgard, W. (2015) IEEE/RSJ International Conference on , pages 681#687. IEEE.

La présente invention utilise différentes images standards et compressées d'un même plan focal hyperspectral. Une méthode de fusion d'image par réseau de neurones profond et convolutif est présentée dans « Multimodal deep learning for robust rgb-d object recognition. In Intelligent Robots and Systems (IROS) », Eitel, A., Springenberg, J. T., Spinello, L., Riedmiller, M., and Burgard, W. (2015) IEEE/RSJ International Conference on , pages 681#687. IEEE. Ce document présente une structure de réseau de neurones profond et convolutif utilisant deux chemins de traitement, un chemin par type d'image d'une même scène, complété par des couches fusionnant les deux chemins ; la fonction implémentée par ce réseau de neurones profond et convolutif est une classification des images. Cette structure n'est pas adaptée en l'état pour la présente invention, car non adaptée aux images compressées en deux dimensions d'un plan focal hyperspectral en trois dimensions, et ayant pour fonction la classification de la scène et non la détection de particularités dans cette scène.

Les différentes diffractions de l'image compressée contenant une information spectrale importante mais dont chaque pixel contient une somme des diffractions à différentes longueurs d'onde, un mode de réalisation de l'invention peut également utiliser la partie centrale de l'image, non diffractée, et permet de rechercher dans l'image complète les caractéristiques spatiales (forme, texture, etc.) et spectrale (réflectance).

Selon un mode de réalisation, le réseau de neurones est architecturé pour calculer une probabilité de présence de la ou les particularités recherchées dans ladite scène hyperspectrale depuis l'ensemble des dites au moins une image compressée et desdites au moins une image standard non-diffractée.

Selon un mode de réalisation, ledit réseau de neurones convolutif est architecturé de façon à prendre en compte les décalages des plans focaux des différents capteurs d'acquisition des images et intégrer la fonction homographique permettant de fusionner les informations des différents capteurs en prenant en compte les parallaxes des différentes images.

Selon un mode de réalisation, on prévoit un dispositif de capture d'une image d'une scène hyperspectrale et de détection de particularités dans cette scène hyperspectrale en trois dimensions comprenant en outre un système d'acquisition d'au moins une image standard non-diffractée de ladite scène hyperspectrale.

Selon un mode de réalisation, ladite au moins une image standard non-diffractée est obtenue par un capteur infrarouge du système d'acquisition. Ce mode de réalisation permet d'obtenir une information invisible à l'œil humain.

Selon un mode de réalisation, ladite au moins une image standard non-diffractée est obtenue par un capteur dont la longueur d'onde est comprise entre 300 nanomètres et 2000 nanomètres. Ce mode de réalisation permet d'obtenir une information dans le domaine visible et invisible à l'œil humain.

Selon un mode de réalisation, ladite au une moins image standard non-diffractée et ladite au moins une image compressée sont obtenues par un ensemble de miroirs semi-transparents de sorte à capter la scène hyperspectrale sur plusieurs capteurs simultanément. Ce mode de réalisation permet de capter instantanément des plans identiques.

Selon un mode de réalisation, le système d'acquisition comprend un moyen d'acquisition d'au moins une image compressée d'un plan focal de la scène hyperspectrale.

Selon un mode de réalisation, l'image compressée est non-homogène.

Selon un mode de réalisation, l'image compressée est une image en deux dimensions.

Selon un mode de réalisation, le réseau de neurones est architecturé pour générer une image pour chaque particularité recherchée dont la valeur de chaque pixel aux coordonnées (x ; y) correspond à la probabilité de présence de ladite particularité aux même coordonnées de la scène hyperspectrale.

Selon un mode de réalisation, l'image compressée obtenue contient la portion d'image de la scène non diffractée au centre.

Selon un mode de réalisation, le système de détection directe ne met pas en œuvre de calcul d'un cube hyperspectal de la scène pour la détection de particularités.

Selon un autre aspect, l'invention se rapporte à un procédé de détection de particularités dans une scène hyperspectrale en trois dimensions, caractérisé en ce qu'un système de détection directe de particularités dans ladite scène hyperspectrale intégrant un réseau de neurones convolutif détecte la ou les particularités recherchées dans ladite scène hyperspectrale depuis au moins une image compressée de la scène hyperspectrale.

Selon un mode de réalisation, M=7.

Selon un autre aspect, l'invention se rapporte à un programme d'ordinateur comprenant des instructions qui, lorsque le programme est exécuté par un ordinateur, conduisent celui-ci à mettre en œuvre le procédé.

DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 8 représentent :

**[Fig. 1]** : une représentation schématique de face des éléments d'un dispositif de capture et de détection dans une scène hyperspectrale selon un mode de réalisation de l'invention ;

[Fig. 2] : une représentation schématique structurelle des éléments du dispositif de la Fig. 1 ;

[Fig. 3] : une représentation schématique structurelle alternative des éléments du dispositif de la Fig. 1 ;

[Fig. 4] : une représentation schématique des diffractions obtenues par le dispositif d'acquisition de la Fig. 2 ;

[Fig. 5] : une représentation schématique de l'architecture du réseau de neurones de la Fig. 2.

[Fig. 6] : une représentation schématique de face des éléments d'un dispositif de capture et de détection dans une scène hyperspectrale selon un deuxième mode de réalisation de l'invention ;

[Fig. 7] : une représentation schématique structurelle des éléments du dispositif de la Fig. 6 ;

[Fig. 8] : une représentation schématique de l'architecture du réseau de neurones de la Fig. 7.

MANIERE DE DECRIRE L'INVENTION

Par « directe », quand on qualifie la détection de particularité, on décrit ainsi que le résultat de sortie du système de détection est la particularité recherchée. On exclut ici les cas où le résultat de sortie du système de détection ne correspond pas à la particularité recherchée, mais correspond uniquement à un intermédiaire dans le calcul de la particularité. Toutefois, le résultat de sortie du système de détection directe peut, en plus de correspondre à la particularité recherchée, aussi être utilisé pour des traitements ultérieurs. Notamment, par « direct », on entend que le résultat de sortie du système de détection de particularités n'est pas un cube hyperspectral de la scène qui, en soi, ne constitue pas une particularité de la scène.

Par « compressée », on fait référence à une image bi-dimensionnelle d'une scène tridimensionnelle comprenant des informations spatiales et spectrales de la scène tridimensionnelle. Les informations spatiales et spectrales de la scène tridimensionnelle sont ainsi projetées au moyen d'un système optique sur une surface de captation bidimensionnelle. Une telle image « compressée » peut comprendre une ou plusieurs images diffractées de la scène tridimensionnelle, ou des parties de celles-ci. En complément, elle peut aussi comprendre une partie d'une image non-diffractée de la scène. Ainsi, le terme « compressé » est utilisé parce qu'une représentation en deux-dimensions d'une information spectrale tridimensionnelle est possible. Par « spectral », on comprend qu'on va au-delà, en terme de nombre de fréquences détectées, d'une image RGB « standard » de la scène.

Par « standard », on fait référence, par opposition à une image « compressée », à une image ne présentant pas de diffraction de la scène hyperspectrale. Une telle image peut quand même être obtenue par des manipulations optiques par l'intermédiaire de miroirs réfléchissants ou de lentilles.

Par « non-homogène », on fait référence à une image dont les propriétés ne sont pas identiques sur l'ensemble de l'image. Par exemple, une image « non-homogène » peut contenir, à certaines localisations, des pixels dont l'information comprend essentiellement des informations spectrales à une certaine bande de longueur d'onde respective, ainsi que, en d'autres localisations, des pixels dont l'information comprend essentiellement des informations non spectrales. Un traitement informatique d'une telle image « non-homogène » n'est pas possible, car les propriétés nécessaires à son traitement ne sont pas identiques en fonction des localisations dans cette image.

Par « particularité », on fait référence à une caractéristique de la scène - cette caractéristique peut être spatiale, spectrale, correspondre à une forme, une couleur, une texture, une signature spectrale ou une combinaison de celles-ci, et peut notamment être interprétée de manière sémantique.

Par « objet », on fait référence au sens commun utilisé pour ce terme. Une détection d'objet sur une image correspond à la localisation et à une interprétation sémantique de la présence de l'objet sur la scène imagée. Un objet peut être caractérisé par sa forme, sa couleur, sa texture, sa signature spectrale ou une combinaison de ces caractéristiques.

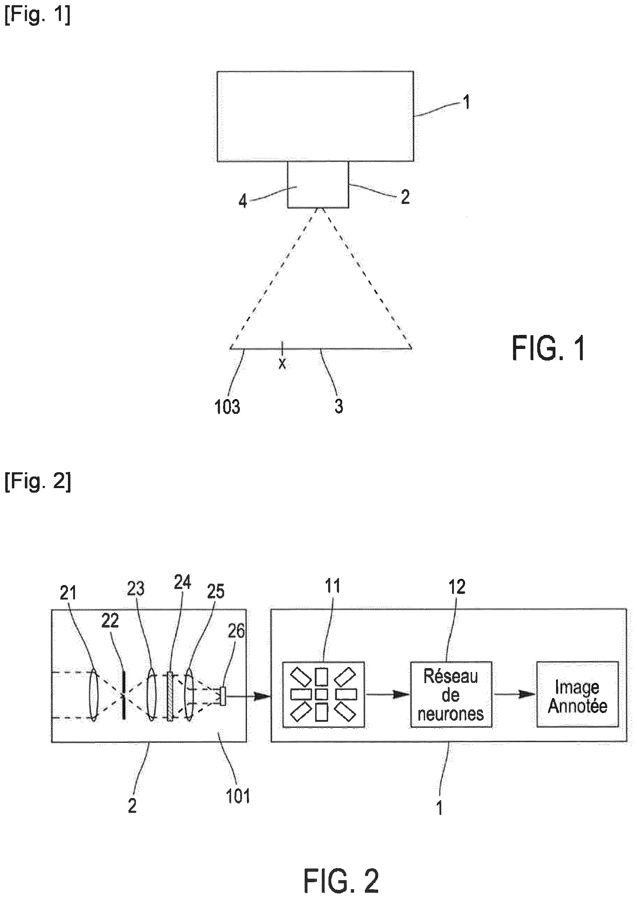

La Fig. 1 illustre un dispositif de capture 2 d'une scène hyperspectrale 3 comportant un capteur, ou système d'acquisition 4, permettant d'obtenir une image compressée en deux dimensions 11 d'un plan focal 103 d'une scène observée. La scène hyperspectrale peut être repérée dans l'espace au moyen d'un repère orthonormé (x ;y ;z ) non représenté. Pour marquer les idées, les coordonnées x sont par exemple mesurées le long de l'axe représenté horizontal sur la figure 1, alors que les coordonnées y sont mesurées selon l'axe orthogonal à la feuille sur laquelle la figure 1 est représentée. L'axe z complète le repère orthonormé, et correspond par exemple à l'axe optique du dispositif de capture 2. Toutefois, d'autres orientations sont possibles.

Tel qu'illustré sur la Fig. 2, le dispositif de capture 2 comporte une première lentille convergente 21 qui focalise le plan focal 103 sur une ouverture 22. Un collimateur 23 capte les rayons traversant l'ouverture 22 et transmet ces rayons à un réseau de diffraction 24. Une seconde lentille convergente 25 focalise ces rayons issus du réseau de diffraction 24 sur une surface de captation 26.

La structure de cet assemblage optique est relativement similaire à celle décrite dans la publication scientifique « Computed-tomography imaging spectrometer : experimental calibration and reconstruction results », publiée dans APPLIED OPTICS, volume 34 (1995) nombre 22.

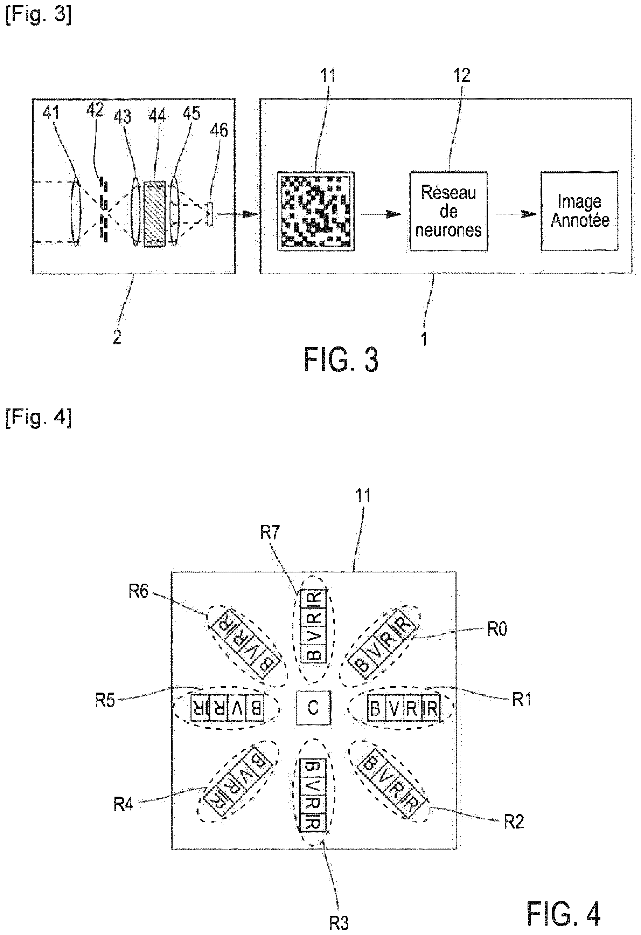

Cette structure optique permet d'obtenir une image compressée 11, illustrée sur la Fig. 4, présentant plusieurs diffractions R0-R7 du plan focal 103 disposées autour d'une image non diffractée de petite taille C. Dans l'exemple de la Fig. 4, l'image compressée 11 présente huit diffractions R0-R7 distinctes obtenues avec deux axes de diffraction du réseau de diffraction 24 disposés aussi éloignés que possible l'un de l'autre dans un plan normal à l'axe optique, c'est-à-dire sensiblement orthogonaux l'un à l'autre.

En variante, trois axes de diffractions peuvent être utilisés sur le réseau de diffraction 24 de sorte à obtenir une image compressée 11 avec seize diffractions. Les trois axes de diffraction peuvent être équirépartis, c'est-à-dire séparés les uns des autres par un angle de 60°.

Ainsi, de manière générale, l'image compressée comprend $2^{R+1}$ diffractions si on utilise R réseaux de diffraction équirépartis, c'est-à-dire séparés par le même angle les uns des autres.

Les surfaces de captation 26 ou 46 (présentée ci-dessous) peuvent correspondre à un capteur CCD (pour « charge-coupled device » dans la littérature anglo-saxonne, c'est-à-dire un dispositif à transfert de charge), à un capteur

**EP 3 714 399 B1**

CMOS (pour « complementary metal-oxide-semiconductor » dans la littérature anglo-saxonne, une technologie de fabrication de composants électroniques), ou à tout autre capteur connus. Par exemple, la publication scientifique « Practical Spectral Photography », publiée dans Euro-graphics, volume 31 (2012) nombre 2, propose d'associer cette structure optique à un appareil photo numérique standard pour capter l'image diffractée.

En variante, tel qu'illustré sur la Fig. 3, le dispositif de capture 2 peut comporter une première lentille convergente 41 qui focalise le plan focal 103 sur un masque 42. Un collimateur 43 capte les rayons traversant le masque 42 et transmet ces rayons à un prisme 44. Une seconde lentille convergente 45 focalise ces rayons issus du prisme 44 sur une surface de captation 46. Le masque 42 définit un codage pour l'image 13.

La structure de cet assemblage optique est relativement similaire à celle décrite dans la publication scientifique « Compressive Coded Aperture Spectral Imaging », Gonzalo R. Arce, David J. Brady, Lawrence Carin, Henry Arguello, and David S. Kittle.

En variante, les surfaces de captation 26 ou 46 peuvent correspondre au dispositif d'acquisition photographique d'un ordiphone ou tout autre dispositif portable incluant un dispositif d'acquisition photographique, en ajoutant le dispositif de capture 2 de la scène hyperspectrale 3 devant le dispositif d'acquisition photographique.

En variante, le système d'acquisition 4 peut comprendre une réalisation mécanique compacte et intégrable dans un dispositif portable et autonome et le système de détection est inclus dans ledit dispositif portable et autonome.

Par exemple, chaque pixel de l'image compressée 11 est codé sur trois couleurs rouge, vert et bleu et sur 8 bits permettant ainsi de représenter 256 niveaux sur chaque couleur.

En variante, les surfaces de captation 26 ou 46 peuvent être un dispositif dont les longueurs d'ondes captées ne sont pas dans la partie visible. Par exemple, le dispositif 2 peut intégrer des capteurs dont la longueur d'onde est comprise entre 0,001 nanomètre et 10 nanomètres ou un capteur dont la longueur d'onde est comprise entre 10000 nanomètres et 20000 nanomètres, ou un capteur dont la longueur d'onde est comprise entre 300 nanomètres et 2000 nanomètres. Il peut s'agir d'un dispositif infrarouge.

Lorsque l'image 11 du plan focal hyperspectral observé est obtenue, le système de détection 1 met en œuvre un réseau de neurones 12 pour détecter une particularité dans la scène observée à partir des informations de l'image compressée 11.

Ce réseau de neurones 12 vise à déterminer la probabilité de présence de la particularité recherchée pour chaque pixel localisé aux coordonnées x et y de la scène hyperspectrale 3 observée.

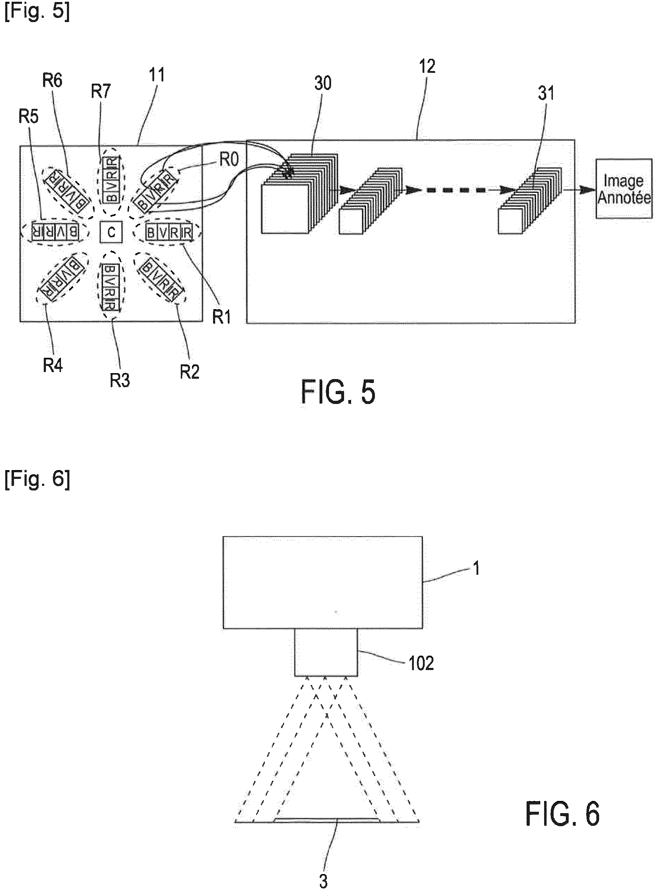

Pour ce faire, tel qu'illustré sur la Fig. 5, le réseau de neurones 12 comporte une couche d'entrée 30, apte à extraire les informations de l'image 11 et une couche de sortie 31, apte à traiter ces informations de sorte à générer une image dont l'intensité de chaque pixel aux coordonnées x et y, correspond à la probabilité de présence de la particularité aux coordonnées x et y de la scène hyperspectrale 3.

La couche d'entrée 30 est peuplée à partir des pixels formant l'image compressée. Ainsi, la couche d'entrée est un tenseur d'ordre trois, et possède deux dimensions spatiales de taille $X_{MAX}$ et $Y_{MAX}$, et une dimension de profondeur de taille $D_{MAX}$, correspondant au nombre de sous-ensembles de l'image compressée copiés dans la couche d'entrée. L'invention utilise la relation non linéaire $f(x_t, y_t, d_t) \rightarrow (x_{img}, y_{img})$ définie pour $x_t \varepsilon [0..X_{MAX}[, y_t \in [0..Y_{MAX}[$ et $d_t \in [0..D_{MAX}[$ permettant de calculer les coordonnées $x_{img}$ et $y_{img}$ du pixel de l'image compressée dont l'intensité est copiée dans le tenseur d'ordre trois de ladite couche d'entrée du réseau de neurones aux coordonnées $(x_t, y_t, d_t)$.

Par exemple, dans le cas d'une image compressée 11 obtenue à partir du dispositif de capture de la figure 2, la couche d'entrée 30 peut être peuplée de la manière suivante :

$$f(x_t, y_t, d_t) = \begin{cases} x_{img} = x + x_{offsetX}(n) + \lambda.\lambda_{sliceX} \\ y_{img} = y + y_{offsetY}(n) + \lambda.\lambda_{sliceY} \end{cases}$$

avec :

n=floor(M(d_t-1)/D_{MAX}) ;
n compris entre 0 et M, le nombre de diffractions de l'image compressée ;
$\lambda$=(d_t-1)mod(D_{MAX}/M) ;
$d_t$ compris entre 1 et $D_{MAX}$ ;
$x_t$ compris entre 0 et $X_{MAX}$ ;
$y_t$ compris entre 0 et $Y_{MAX}$ ;
$X_{MAX}$ la taille selon l'axe x du tenseur d'ordre trois de la couche d'entrée ;
$Y_{MAX}$ la taille selon l'axe y du tenseur d'ordre trois de la couche d'entrée ;
$D_{MAX}$ la profondeur du tenseur d'ordre trois de la couche d'entrée ;
$\lambda_{sliceX}$, la constante du pas spectral selon l'axe x de ladite image compressée ;
$\lambda_{sliceY}$, la constante du pas spectral selon l'axe y de ladite image compressée ;

**10**

$x_{offsetX}(n)$ correspondant au décalage suivant l'axe x de la diffraction n ;

$y_{offsetY}(n)$ correspondant au décalage suivant l'axe y de la diffraction n.

Floor est un opérateur de troncature bien connu.

Mod représente l'opérateur mathématique modulo.

Comme il est en particulier bien visible sur la figure 5, chaque tranche, en profondeur, du tenseur d'entrée d'ordre trois du réseau de neurones, reçoit une partie d'un lobe de diffraction correspondant sensiblement à un intervalle de longueurs d'onde.

En variante, l'invention permet de corréler les informations contenues dans les différentes diffractions de l'image diffractée avec des informations contenues dans la partie centrale non-diffractée de l'image.

Selon cette variante, on peut rajouter une tranche supplémentaire dans la direction de la profondeur de la couche d'entrée, dont les neurones seront peuplés avec l'intensité détectées dans les pixels de l'image compressée correspondant à la détection non-diffractée. Par exemple, si on affecte à cette tranche la coordonnée $d_t=0$, on peut conserver la formule ci-dessus pour le peuplement de la couche d'entrée pour $d_t$ supérieur ou égal à 1, et peupler la couche $d_t=0$ de la manière suivante :

$$x_{img}=(Img_{width}/2)-X_{MAX}+x_t ;$$

$$y_{img}=(Img_{height}/2)-Y_{MAX}+y_t ;$$

Avec :

$Img_{width}$ la taille de l'image compressée selon l'axe x ;

$Img_{height}$ la taille de l'image compressée selon l'axe y.

L'image compressée obtenue par le système optique contient le plan focal de la scène non diffractée au centre, ainsi que les projections diffractées suivant les axes des différents filtres de diffractions. Ainsi, le réseau de neurones utilise, pour la détection directe des particularités recherchées, les informations de ladite au moins une image diffractée suivantes

- l'intensité lumineuse dans la partie centrale et non-diffractée du plan focal de la scène aux coordonnées x et y ; et

- des intensités lumineuses dans chacune des diffractions de ladite image compressée dont les coordonnées x' et y' sont dépendantes des coordonnées x et y de la partie centrale non diffractée du plan focal de la scène.

En variante, dans le cas d'une image compressée 13 obtenue à partir du dispositif de capture de la figure 4, la couche d'entrée 30 peut être peuplée de la manière suivante :

$$f(x_t,y_t,d_t)=\{(x_{img}=x_t) ; (y_{img}=y_t)\}_{(Img=MASK\ si\ dt=0 ; Img=CASSI\ si\ dt>0)},$$

Avec :

MASK : image du masque de compression utilisé,

CASSI : image compressée mesurée,

Img : Image sélectionnée dont le pixel est copié.

Sur la tranche 0 du tenseur d'ordre trois de la couche d'entrée est copiée l'image du masque de compression employé.

Sur les autres tranches du tenseur d'ordre trois de la couche d'entrée est copiée l'image compressée de la scène hyperspectrale.

L'architecture dudit réseau de neurones 12, 14 est composé d'un ensemble de couches convolutives assemblées linéairement et en alternance avec des couches de décimation (pooling), ou d'interpolation (unpooling).

Une couche convolutive de profondeur d, noté CONV(d), est définie par d noyaux de convolution, chacun de ces noyaux de convolution étant appliqué au volume du tenseur d'entrée d'ordre trois et de taille $x_{input}$, $y_{input}$, $d_{input}$. La couche convolutive génère ainsi un volume de sortie, tenseur d'ordre trois, ayant une profondeur d. Une fonction d'activation ACT est appliquée sur les valeurs calculées du volume de sortie de cette couche convolutive.

Les paramètres de chaque noyau de convolution d'une couche convolutive sont spécifiés par la procédure d'apprentissage du réseau de neurones.

Différentes fonctions d'activation ACT peuvent être utilisées. Par exemple, cette fonction peut être une fonction ReLu, définie par l'équation suivante :

$$ReLu(x) = max(0, x)$$

En alternance avec les couches convolutives, des couches de décimation (pooling), ou des couches d'interpolation (unpooling) sont insérées.

Une couche de décimation permet de réduire la largeur et la hauteur du tenseur d'ordre trois en entrée pour chaque profondeur dudit tenseur d'ordre trois. Par exemple, une couche de décimation MaxPool(2,2) sélectionne la valeur maximale d'une tuile glissante sur la surface de 2x2 valeurs. Cette opération est appliquée sur l'ensemble des profondeurs du tenseur d'entrée et génère un tenseur de sortie ayant la même profondeur et une largeur divisée par deux, ainsi qu'une hauteur divisée par deux.

Une couche d'interpolation permet d'augmenter la largeur et la hauteur du tenseur d'ordre trois en entrée pour chaque profondeur dudit tenseur d'ordre trois. Par exemple, une couche d'interpolation MaxUnPool(2,2) copie la valeur d'entrée d'un point glissant sur la surface de 2x2 valeurs de sortie. Cette opération est appliquée sur l'ensemble des profondeurs du tenseur d'entrée et génère un tenseur de sortie ayant la même profondeur et une largeur multipliée par deux, ainsi qu'une hauteur multipliée par deux.

Une architecture de réseau de neurones permettant la détection directe de particularités dans la scène hyperspectrale peut être la suivante :

```
                  Input
          ⬜ CONV(64)
        ⬜ MaxPool(2,2)
          ⬜ CONV(64)
        ⬜ MaxPool(2,2)
          ⬜ CONV(64)
        ⬜ MaxPool(2,2)
          ⬜ CONV(64)
          ⬜ CONV(64)
      ⬜ MaxUnpool(2,2)
          ⬜ CONV(64)
      ⬜ MaxUnpool(2,2)
          ⬜ CONV(64)
      ⬜ MaxUnpool(2,2)
          ⬜ CONV(1)
             ⬜ Output
```

En variante, le nombre de couches de convolution CONV(d) et de décimation MaxPool(2,2) peut être modifié afin de faciliter la détection de particularités ayant une complexité sémantique supérieure. Par exemple, un nombre plus élevé de couches de convolution permet de traiter des signatures plus complexes de forme, de texture, ou spectrales de la particularité recherchée dans la scène hyperspectrale.

En variante, le nombre de couches de déconvolution CONV(d) et d'interpolation MaxUnpool(2, 2) peut être modifié afin de faciliter la reconstruction de la couche de sortie. Par exemple, un nombre plus élevé de couches de déconvolution permet de reconstruire une sortie avec une précision plus importante.

En variante, les couches de convolution CONV(64), peuvent avoir une profondeur différente de 64 afin de traiter un nombre de particularités locales différent. Par exemple, une profondeur de 128 permet de traiter localement 128 particularités différentes dans une scène hyperspectrale complexe.

En variante, les couches d'interpolation MaxUnpool(2, 2) peuvent être de dimension d'interpolation différente. Par exemple, une couche MaxUnpool (4, 4) permet d'augmenter la dimension de traitement de la couche supérieure.

En variante, les couches d'activation ACT de type ReLu(x) insérées suite à chaque convolution et déconvolution, peuvent être de type différent. Par exemple, la fonction softplus définie par l'équation : $f(x) = log(1 + e^x)$ peut être utilisée.

En variante, les couches de décimation MaxPool(2, 2) peuvent être de dimension de décimation différente. Par exemple, une couche MaxPool(4, 4) permet de réduire la dimension spatiale plus rapidement et de concentrer la recherche sémantique du réseau de neurones sur les particularités locales.

En variante, des couches entièrement connectées peuvent être insérées entre les deux couches de convolution centrale à la ligne 6 de la description afin de traiter la détection dans un espace mathématique plus élevé. Par exemple, trois couches entièrement connectées de taille 128 peuvent être insérées.

En variante, les dimensions des couches de convolution CONV(64), de décimation MaxPool(2, 2), et d'interpolation MaxUnpool(2, 2) peuvent être ajustées sur une ou plusieurs couches, afin d'adapter l'architecture du réseau de neurones au plus proche du type de particularités recherchées dans la scène hyperspectrale.

Les poids dudit réseau de neurones 12 sont calculés au moyen d'un apprentissage. Par exemple, un apprentissage par rétro-propagation du gradient ou ses dérivés à partir de données d'apprentissage peut être utilisé pour calculer ces poids.

En variante, le réseau de neurones 12 peut déterminer la probabilité de présence de plusieurs particularités distinctes au sein de la même scène observée. Dans ce cas, la dernière couche convolutive aura une profondeur correspondant au nombre de particularités distinctes à détecter. Ainsi la couche convolutive CONV(1) est remplacée par une couche convolutive CONV(u), où u correspond au nombre de particularités distinctes à détecter.

La Fig. 6 illustre un dispositif de capture 102 d'une scène hyperspectrale 3 comportant un ensemble de capteurs permettant d'obtenir au moins une image compressée en deux dimensions 11 ou 13 et au moins une image standard 112 d'un plan focal hyperspectral 103 d'une scène observée.

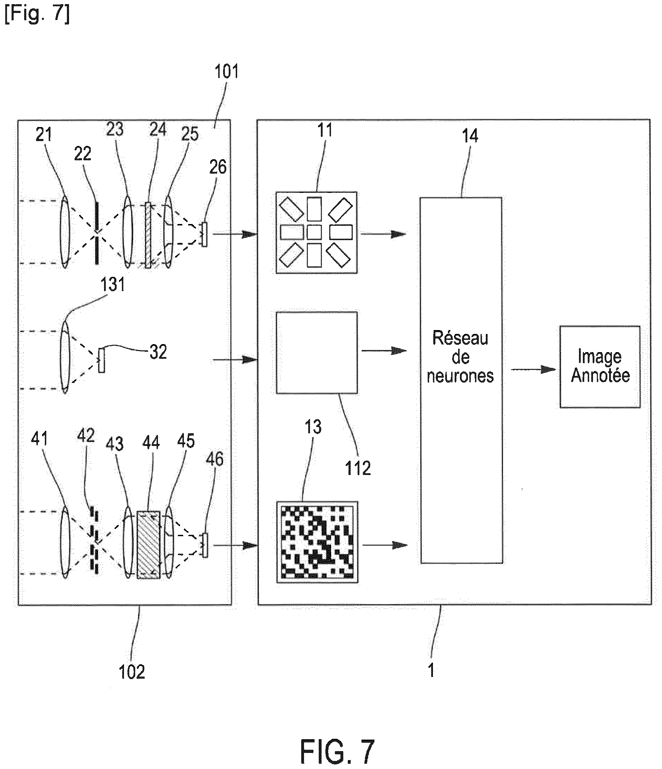

Tel qu'illustré sur la Fig. 7, le dispositif de capture 102 comporte au moins un dispositif d'acquisition, ou capteur, 101 d'une image compressée tel que décrit ci-dessus en référence avec la figure 2.

La surface de captation 32 (présentée ci-dessous) peut correspondre à un capteur CCD (pour « charge-coupled device » dans la littérature anglo-saxonne, c'est-à-dire un dispositif à transfert de charge), à un capteur CMOS (pour « complementary metal-oxide-semiconductor » dans la littérature anglo-saxonne, une technologie de fabrication de composants électroniques), ou à tout autre capteur connus.

Le dispositif de capture 102 peut en outre comprendre un dispositif d'acquisition d'une image « standard » non compressée, comprenant une lentille convergente 131 et une surface de captation 32. Le dispositif de capture 102 peut en outre comprendre un dispositif d'acquisition d'une image compressée tel que décrit ci-dessus en référence avec la figure 3.

Dans l'exemple présenté, le dispositif d'acquisition de l'image standard et le dispositif d'acquisition de l'image compressée sont disposés juxtaposés avec des axes optiques parallèles, et des faisceaux optiques se recouvrant au moins partiellement. Ainsi, une portion de la scène hyperspectrale est imagée à la fois par les dispositifs d'acquisition. Ainsi, les plans focaux des différents capteurs d'acquisition des images sont décalés les uns par rapport aux autres transversalement aux axes optiques de ces capteurs.

En variante, on utilise un jeu de miroirs partiellement réfléchissants de sorte à capter ladite au une moins images standards non-diffractées 112 et ladite au moins une image compressée 11, 13 de la même scène hyperspectrale 3 sur plusieurs capteurs simultanément.

De préférence, chaque pixel de l'image standard 112 est codé sur trois couleurs rouge, vert et bleu et sur 8 bits permettant ainsi de représenter 256 niveaux sur chaque couleur.

En variante, la surface de captation 32 peut être un dispositif dont les longueurs d'ondes captées ne sont pas dans la partie visible. Par exemple, le dispositif 2 peut intégrer des capteurs dont la longueur d'onde est comprise entre 0,001 nanomètre et 10 nanomètres ou un capteur dont la longueur d'onde est comprise entre 10000 nanomètres et 20000 nanomètres, ou un capteur dont la longueur d'onde est comprise entre 300 nanomètres et 2000 nanomètres.

Lorsque les images 11, 112 ou 13 du plan focal hyperspectral observé sont obtenues, le moyen de détection met en œuvre un réseau de neurones 14 pour détecter une particularité dans la scène observée à partir des informations des images compressées 11 et 13, et de l'image standard 112.

En variante, seules les images compressée 11 et standard 112 sont utilisées et traitées par le réseau de neurones 14.

En variante, seules les images compressée 13 et standard 112 sont utilisées et traitées par le réseau de neurones 14.

Ainsi, quand la description se rapporte à un ensemble d'images compressées, il s'agit d'au moins une image compressée.

**Ce réseau** de neurones 14 vise à déterminer la probabilité de présence de la particularité recherchée pour chaque pixel localisé aux coordonnées x et y de la scène hyperspectrale 3 observée.

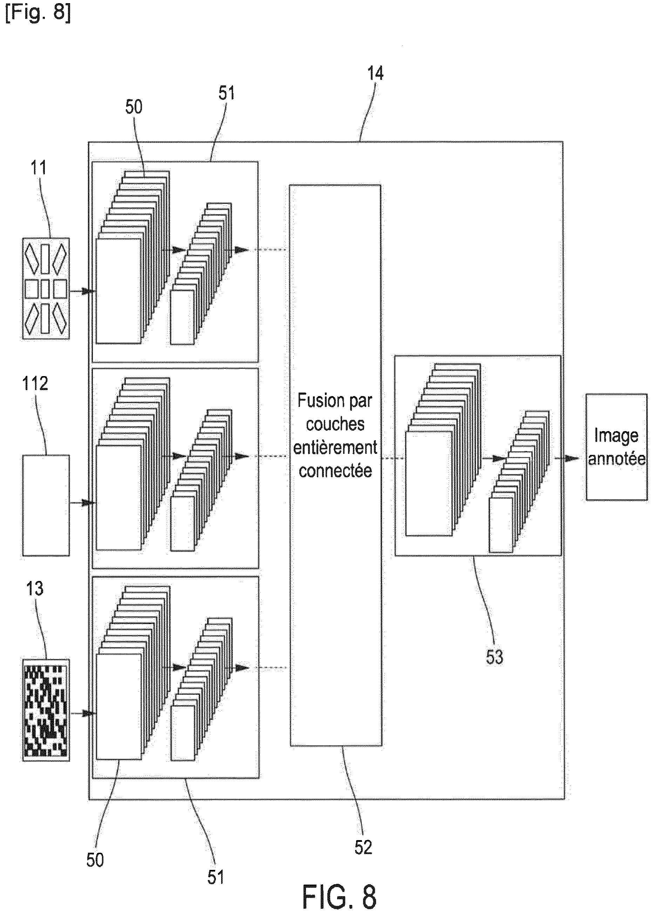

Pour ce faire, tel qu'illustré sur la Fig. 8, le réseau de neurones 14 comporte un encodeur 51 pour chaque image compressée et pour chaque image non compressée ; chaque encodeur 51 possède une couche d'entrée 50, apte à extraire les informations de l'image 11, 112 ou 13. Le réseau de neurones fusionne les informations provenant des différents encodeurs 51 au moyen de couches de convolution ou de couches entièrement connectées 52 (cas particulier représenté sur la figure). Un décodeur 53 et sa couche de sortie 131, apte à traiter ces informations de sorte à générer une image dont l'intensité de chaque pixel, à la coordonnée x et y, correspond à la probabilité de présence de la particularité aux coordonnées x et y de la scène hyperspectrale 3, est inséré suite à la fusion des informations.

Tel qu'illustré sur la Fig. 5, la couche d'entrée 50 d'un encodeur 51 est remplie avec les différentes diffractions de l'image compressée 11 comme décrit ci-dessus.

Le peuplement décrit ci-dessus correspond au peuplement de la première entrée (« Input1 ») du réseau de neurones, selon l'architecture présentée ci-dessous.

Pour la deuxième entrée (« Input2 ») du réseau de neurones, le peuplement de la couche d'entrée relative à l'image « standard » est peuplée en copiant directement l'image « standard » dans le réseau de neurones.

Selon un exemple de réalisation où on utilise également une image compressée 13, la troisième entrée « Input3 » du réseau de neurones est peuplée comme décrit ci-dessus pour l'image compressée 13.

Une architecture de réseau de neurones permettant la détection directe de particularités dans la scène hyperspectrale peut être la suivante :

| Input1 | Input2 | Input3 |
|---|---|---|
| $\Rightarrow$ CONV(64) | $\Rightarrow$ CONV(64) | $\Rightarrow$ CONV(64) |
| $\Rightarrow$ MaxPool(2,2) | $\Rightarrow$ MaxPool(2,2) | $\Rightarrow$ MaxPool(2,2) |
| $\Rightarrow$ CONV(64) | $\Rightarrow$ CONV(64) | $\Rightarrow$ CONV(64) |
| $\Rightarrow$ MaxPool(2,2) | $\Rightarrow$ MaxPool(2,2) | $\Rightarrow$ MaxPool(2,2) |

$\Rightarrow$ CONV(64)

$\Rightarrow$ CONV(64)

$\Rightarrow$ MaxUnpool(2,2)

$\Rightarrow$ CONV(64)

$\Rightarrow$ MaxUnpool(2,2)

$\Rightarrow$ CONV(64)

$\Rightarrow$ MaxUnpool(2,2)

$\Rightarrow$ CONV(1)

$\Rightarrow$ Output

**Dans** cette description, « Input1 » correspond à la portion de la couche d'entrée 50 peuplée à partir de l'image compressée 11. « Input2 » correspond à la portion de la couche d'entrée 50 peuplée à partir de l'image standard 112, et « Input3 » correspond à la portion de la couche d'entrée 50 peuplée à partir de l'image compressée 13. La ligne « CONV(64) » à la cinquième ligne de l'architecture opère la fusion des informations.

En variante, la ligne « CONV(64) » à la cinquième ligne de l'architecture opérant la fusion des informations peut être remplacée par une couche entièrement connectée ayant pour entrée l'ensemble des sorties MaxPool(2, 2) des chemins de traitement de l'ensemble des entrées « input1 », « input2 » et « input3 » et en sortie un tenseur d'ordre un servant d'entrée à la couche suivante « CONV(64) » présentée à la sixième ligne de l'architecture.

Notamment, la couche de fusion du réseau de neurones prend en compte les décalages des plans focaux des différents capteurs d'acquisition des images, et intègre la fonction homographique permettant de fusionner les informations des différents capteurs en prenant en compte les parallaxes des différentes images.

Les variantes présentées ci-dessus pour le premier mode de réalisation peuvent également être appliquées ici.

Les poids dudit réseau de neurones 14 sont calculés au moyen d'un apprentissage. Par exemple, un apprentissage par rétro-propagation du gradient ou ses dérivés à partir de données d'apprentissage peut être utilisé pour calculer ces poids.

En variante, le réseau de neurones 14 peut déterminer la probabilité de présence de plusieurs particularités distinctes au sein de la même scène observée. Dans ce cas, la dernière couche convolutive aura une profondeur correspondant au nombre de particularités distinctes à détecter. Ainsi la couche convolutive CONV(1) est remplacée par une couche convolutive CONV(u), où u correspond au nombre de particularités distinctes à détecter.

Selon une variante de réalisation, comme représenté sur la figure 5, on n'utilise pas nécessairement un dispositif d'acquisition dédié distinct pour obtenir l'image « standard » 112. En effet, comme présenté ci-dessus en relation avec la figure 3, dans certains cas, une partie de l'image compressée 11 comprend une image « standard » de la scène hyperspectrale. Il s'agit notamment de la portion d'image C décrite ci-dessus. Dans ce cas, on peut utiliser cette portion d'image « C » de l'image compressée 11 comme image « standard » d'entrée du réseau de neurones.

Ainsi, le réseau de neurones 14 utilise, pour la détection directe des particularités recherchées, les informations de ladite au moins une image compressée suivantes :

- l'intensité lumineuse dans la partie centrale et non-diffractée du plan focal de la scène aux coordonnées x et y ; et

- des intensités lumineuses dans chacune des diffractions de ladite image compressée dont les coordonnées x' et y' sont dépendantes des coordonnées x et y de la partie centrale non diffractée du plan focal de la scène.

L'invention a été présentée ci-dessus dans différentes variantes, dans lesquelles une particularité détectée de la scène hyperspectrale est une image bidimensionnelle dont la valeur de chaque pixel aux cordonnées x et y correspond à la probabilité de présence d'une particularité aux mêmes coordonnées x et y du plan focal hyperspectral de la scène 3. On peut, toutefois, en variante, prévoir, selon les modes de réalisation de l'invention, la détection d'autres particularités. Selon un exemple, une telle autre particularité peut être obtenue à partir de l'image issue du réseau de neurones présentée ci-dessus. Pour cela, le réseau de neurones 12, 14, peut présenter une couche ultérieure, adaptée pour traiter l'image en question et déterminer la particularité recherchée. Selon un exemple, cette couche ultérieure peut par exemple compter les pixels de l'image en question pour lesquels la probabilité est supérieure à un certain seuil. Le résultat obtenu est alors une superficie (éventuellement rapportée à une superficie standard de l'image). Selon un exemple d'application, si l'image présente, en chaque pixel, une probabilité de présence d'un composé chimique, le résultat obtenu peut alors correspondre à une concentration du composé chimique dans la scène hyperspectrale imagée.

Selon un autre exemple, cette couche ultérieure peut par exemple n'avoir qu'un neurone dont la valeur (réel ou booléen) indiquera la présence ou l'absence d'un objet ou d'une particularité recherché dans la scène hyperspectrale. Ce neurone aura une valeur maximale en cas de présence de l'objet ou la particularité et une valeur minimale en cas inverse. Ce neurone sera entièrement connecté à la couche précédente, et les poids de connexion seront calculés au moyen d'un apprentissage.

Système de détection 1
dispositif de capture 2
scène hyperspectrale 3
système d'acquisition 4
image compressée en deux dimensions 11, 13
réseau de neurones 12, 14
première lentille convergente 21
ouverture 22
collimateur 23
réseau de diffraction 24
seconde lentille convergente 25
surface de captation 26
couche d'entrée 30
couche de sortie 31
surface de captation 32
première lentille convergente 41
masque 42
collimateur 43
prisme 44
seconde lentille convergente 45
surface de captation 46
couche d'entrée 50
encodeur 51
couche de convolution ou couche entièrement connectée 52
décodeur 53
capteur 101
dispositif de capture 102
plan focal 103
image standard 112
lentille 131

**Revendications**

1. Dispositif de détection en temps réel de particularités dans une scène hyperspectrale (3) en trois dimensions, **caractérisé en ce qu'**il comporte un système de détection directe (1) de particularités dans ladite scène hyperspectrale (3) intégrant un réseau de neurones profond et convolutif (12, 14) architecturé pour détecter la ou les particularités recherchées dans ladite scène hyperspectrale (3) depuis au moins une image compressée en deux dimensions du plan focal de la scène hyperspectrale, obtenue depuis un système d'acquisition, et comprenant au moins une image diffractée de la scène tridimensionnelle, une couche d'entrée du réseau de neurones étant peuplée à partir des pixels formant ladite au moins une image compressée, le réseau de neurones étant architecturé pour calculer une probabilité de présence de la ou les particularités recherchées pour chaque pixel localisé aux coordonnées (x ; y) de la scène hyperspectrale.

2. Dispositif selon la revendication 1, dans lequel une couche de sortie du réseau de neurones comprend une couche convolutive CONV(u), où u est supérieur ou égal à 1 et correspond au nombre de particularités recherchées.

3. Dispositif de capture d'une image (11) d'une scène hyperspectrale (3) et de détection de particularités dans cette scène hyperspectrale (3) en trois dimensions comprenant un dispositif selon l'une quelconque des revendications 1 à 2, et comprenant en outre ledit système d'acquisition (4) de l'au moins une image compressée (11, 13) de la scène hyperspectrale (3) en trois dimensions.

4. Dispositif selon la revendication 3, dans lequel au moins une desdites images compressées (11) est obtenue par un capteur du système d'acquisition comportant :

   - une première lentille convergente (21) configurée pour focaliser les informations d'une scène sur une ouverture (22) ; et
   - un collimateur (23) configuré pour capter les rayons traversant ladite ouverture (22) et pour transmettre ces rayons sur un réseau de diffraction (24) ; et
   - une seconde lentille convergente (25) configurée pour focaliser les rayons issus du réseau de diffraction (24) sur une surface de captation (26).

5. Dispositif selon l'une des revendications 3 à 4, dans lequel au moins une desdites images compressées (13) est obtenue par un capteur du système d'acquisition comportant :

   une première lentille convergente (41) configurée pour focaliser les informations d'une scène sur un masque (42) ; et
   un collimateur (43) configuré pour capter les rayons traversant ledit masque (42) et pour transmettre ces rayons sur un prisme (44) ; et
   une seconde lentille convergente (45) configurée pour focaliser les rayons issus du prisme (44) sur une surface de captation (46).

6. Dispositif selon l'une des revendications 3 à 5, dans lequel l'image compressée (11) est obtenue par un capteur du système d'acquisition dont la longueur d'onde est comprise :

   - entre 0,001 nanomètre et 10 nanomètres ; ou
   - entre 10000 nanomètres et 20000 nanomètres ; ou
   - entre 300 nanomètres et 2000 nanomètres.

7. Dispositif selon l'une quelconque des revendications 1 à 6, dans lequel le réseau de neurones convolutif (12, 14) est architecturé pour détecter la ou les particularités recherchées dans ladite scène hyperspectrale (3) depuis l'ensemble desdites au moins une image compressée (11 et 13) et d'au moins une image standard non-diffractée (112, C) de la scène hyperspectrale.

8. Dispositif selon la revendication 7, dans lequel le réseau de neurones est architecturé pour calculer une probabilité de présence de la ou les particularités recherchées dans ladite scène hyperspectrale (3) depuis l'ensemble desdites au moins une image compressée (11 et 13) et desdites au moins une image standard non-diffractées (12).

9. Dispositif selon la revendication 7 ou 8, dans lequel ledit réseau de neurones convolutif (14) est architecturé de façon à prendre en compte les décalages des plans focaux des différents capteurs (11, 12 et 13) d'acquisition des images, et intégrer la fonction homographique permettant de fusionner les informations des différents capteurs en prenant en compte les parallaxes des différentes images.

10. Dispositif de capture (2) d'une image (11) d'une scène hyperspectrale (3) et de détection (1) de particularités dans cette scène hyperspectrale (3) en trois dimensions comprenant un dispositif selon l'une quelconque des revendications 8 à 9, et comprenant en outre un système d'acquisition (2) d'au moins une image standard non-diffractée (12) de ladite scène hyperspectrale (3).

**11.** Dispositif selon la revendication 10, dans lequel au moins une desdites images standards non-diffractées (12) est obtenue :

- par un capteur infrarouge du système d'acquisition ; et/ou
- par un capteur dont la longueur d'onde est comprise entre 300 nanomètres et 2000 nanomètres du système d'acquisition.

**12.** Dispositif selon l'une des revendications 10 à 11, dans lequel ladite au moins une images standards non-diffractées (12) et ladite au moins une image compressée (11 et 13) sont obtenues par un ensemble de miroirs semi-transparents de sorte à capter la scène hyperspectrale (3) sur plusieurs capteurs simultanément.

**13.** Procédé de détection (1) en temps réel de particularités dans une scène hyperspectrale (3) en trois dimensions, **caractérisé en ce qu'** un système de détection directe (1) de particularités dans ladite scène hyperspectrale (3) intégrant un réseau de neurones convolutif (12, 14) détecte la ou les particularités recherchées dans ladite scène hyperspectrale (3) depuis au moins une image compressée en deux dimensions (11, 13) du plan focal de la scène hyperspectrale obtenue depuis un système d'acquisition, et comprenant au moins une image diffractée de la scène tridimensionnelle, une couche d'entrée du réseau de neurones étant peuplée à partir des pixels formant ladite au moins une image compressée, le réseau de neurones étant architecturé pour calculer une probabilité de présence de la ou les particularités recherchées pour chaque pixel localisé aux coordonnées (x ; y) de la scène hyperspectrale.

**14.** Programme d'ordinateur comprenant des instructions qui, lorsque le programme est exécuté par un ordinateur, conduisent celui-ci à mettre en œuvre le procédé selon la revendication 13.

**Patentansprüche**

**1.** Vorrichtung zur Echtzeiterkennung von Besonderheiten in einer dreidimensionalen Hyperspektralszene (3), **dadurch gekennzeichnet, dass** sie ein System (1) zur direkten Erkennung von Besonderheiten in der genannten Hyperspektralszene (3) umfasst, das ein tiefes neuronales Faltungsnetzwerk (12, 14) integriert, das zum Erkennen der ein oder mehreren gesuchten Besonderheiten in der genannten Hyperspektralszene (3) aus mindestens einem zweidimensional komprimierten Bild der Brennebene der Hyperspektralszene aufgebaut ist, das von einem Erfassungssystem erhalten wurde und mindestens ein gebeugtes Bild der dreidimensionalen Szene umfasst, wobei eine Eingangsschicht des neuronalen Netzwerks auf der Basis der das genannte mindestens eine komprimierte Bild bildenden Pixeln gefüllt wird, wobei das neuronale Netzwerk zum Berechnen einer Wahrscheinlichkeit für das Vorhandensein der ein oder mehreren gesuchten Besonderheiten für jedes Pixel aufgebaut ist, das sich an den Koordinaten (x; y) der Hyperspektralszene befindet.

**2.** Vorrichtung nach Anspruch 1, bei der eine Ausgabeschicht des neuronalen Netzwerks eine Faltungsschicht CONV(u) umfasst, wobei u gleich oder größer 1 ist und der Anzahl der gesuchten Besonderheiten entspricht.

**3.** Vorrichtung zur Aufnahme eines Bildes (11) einer Hyperspektralszene (3) und zur dreidimensionalen Erkennung von Besonderheiten in dieser Hyperspektralszene (3), die eine Vorrichtung nach einem der Ansprüche 1 bis 2 umfasst und außerdem das genannte System (4) zur Erfassung des mindestens einen komprimierten Bildes (11, 13) der dreidimensionalen Hyperspektralszene (3) umfasst.

**4.** Vorrichtung nach Anspruch 3, bei der mindestens eines der genannten komprimierten Bilder (11) durch einen Sensor des Erfassungssystems erhalten wird, der Folgendes umfasst:

- eine erste Sammellinse (21), konfiguriert zum Fokussieren der Informationen einer Szene auf eine Öffnung (22); und
- einen Kollimator (23), konfiguriert zum Aufnehmen der die genannte Öffnung (22) durchquerenden Strahlen und zum Übertragen dieser Strahlen auf ein Beugungsgitter (24); und
- eine zweite Sammellinse (25), konfiguriert zum Fokussieren der vom Beugungsgitter (24) ausgehenden Strahlen auf eine Aufnahmefläche (26).

**5.** Vorrichtung nach einem der Ansprüche 3 bis 4, bei der mindestens eines der genannten komprimierten Bilder (13) durch einen Sensor des Erfassungssystems erhalten wird, der Folgendes umfasst:

eine erste Sammellinse (41), konfiguriert zum Fokussieren der Informationen einer Szene auf eine Maske (42); und

einen Kollimator (43), konfiguriert zum Aufnehmen der die genannte Maske (42) durchquerenden Strahlen und zum Übertragen dieser Strahlen auf ein Prisma (44); und eine zweite Sammellinse (45), konfiguriert zum Fokussieren der vom Prisma (44) ausgehenden Strahlen auf eine Aufnahmefläche (46).

6. Vorrichtung nach einem der Ansprüche 3 bis 5, bei der das komprimierte Bild (11) durch einen Sensor des Erfassungssystems erhalten wird, dessen Wellenlänge liegt zwischen

   - 0,001 Nanometern und 10 Nanometern; oder
   - 10000 Nanometern und 20000 Nanometern; oder
   - 300 Nanometern und 2000 Nanometern.

7. Vorrichtung nach einem der Ansprüche 1 bis 6, bei der das neuronale Faltungsnetzwerk (12, 14) zum Erkennen der ein oder mehreren gesuchten Besonderheiten in der genannten Hyperspektralszene (3) aus der Gesamtheit der genannten mindestens einen komprimierten Bilder (11 und 13) und mindestens eines nicht-gebeugten Standardbildes (112, C) der Hyperspektralszene aufgebaut ist.

8. Vorrichtung nach Anspruch 7, bei der das neuronale Netzwerk zum Berechnen einer Wahrscheinlichkeit für das Vorhandensein der ein oder mehreren gesuchten Besonderheiten in der genannten Hyperspektralszene (3) aus der Gesamtheit der genannten mindestens einen komprimierten Bilder (11 und 13) und des genannten mindestens einen nicht-gebeugten Standardbildes (12) aufgebaut ist.

9. Vorrichtung nach Anspruch 7 oder 8, bei der das genannte neuronale Faltungsnetzwerk (14) zum Berücksichtigen der Verschiebungen der Brennebenen der verschiedenen Bilderfassungssensoren (11, 12 und 13) und zum Integrieren der homographischen Funktion aufgebaut ist, die es ermöglicht, die Informationen der verschiedenen Sensoren unter Berücksichtigung der Parallaxen der verschiedenen Bilder zu fusionieren.

10. Vorrichtung zur Aufnahme (2) eines Bildes (11) einer Hyperspektralszene (3) und zur dreidimensionalen Erkennung (1) von Besonderheiten in dieser Hyperspektralszene (3), die eine Vorrichtung nach einem der Ansprüche 8 bis 9 umfasst und außerdem ein System (2) zur Erfassung mindestens eines nicht-gebeugten Standardbildes (12) der genannten Hyperspektralszene (3) umfasst.

11. Vorrichtung nach Anspruch 10, bei der mindestens eines der genannten nicht-gebeugten Standardbilder (12) erhalten wird:

    - durch einen Infrarotsensor des Erfassungssystems; und/oder
    - durch einen Sensor mit einer Wellenlänge zwischen 300 Nanometern und 2000 Nanometern des Erfassungssystems.

12. Vorrichtung nach einem der Ansprüche 10 bis 11, bei der das genannte mindestens eine nicht-gebeugte Standardbild (12) und das genannte mindestens eine komprimierte Bild (11 und 13) durch einen Satz von semitransparenten Spiegeln erhalten werden, um die Hyperspektralszene (3) auf mehreren Sensoren gleichzeitig aufzunehmen.

13. Verfahren zur Echtzeiterkennung (1) von Besonderheiten in einer dreidimensionalen Hyperspektralszene (3), **dadurch gekennzeichnet, dass** ein System (1) zur direkten Erkennung von Besonderheiten in der genannten Hyperspektralszene (3), das ein neuronales Faltungsnetzwerk (12, 14) integriert, die ein oder mehreren gesuchten Besonderheiten in der genannten Hyperspektralszene (3) aus mindestens einem zweidimensional komprimierten Bild (11, 13) der Brennebene der Hyperspektralszene erkennt, das von einem Erfassungssystem erhalten wurde und mindestens ein gebeugtes Bild der dreidimensionalen Szene umfasst, wobei eine Eingangsschicht des neuronalen Netzwerks auf der Basis der das genannte mindestens eine komprimierte Bild bildenden Pixeln gefüllt wird, wobei das neuronale Netzwerk zum Berechnen einer Wahrscheinlichkeit für das Vorhandensein der ein oder mehreren gesuchten Besonderheiten für jedes Pixel aufgebaut ist, das sich an den Koordinaten (x; y) der Hyperspektralszene befindet.

14. Computerprogramm, das Befehle umfasst, die bei Ausführung des Programms durch einen Computer diesen zum Durchführen des Verfahrens nach Anspruch 13 veranlassen.

**EP 3 714 399 B1**

**Claims**

1. Device for detecting in real time features in a hyperspectral scene (3) in three dimensions, **characterized in that** it comprises a direct detection system (1) of features in said hyperspectral scene (3) integrating a deep convolutional neural network (12, 14) designed to detect the feature(s) sought in said hyperspectral scene ( 3) from at least one compressed two-dimensional image of the focal plane of the hyperspectral scene, obtained from an acquisition system, and comprising at least a diffracted image of the three-dimensional scene, an input layer of the neural network being populated from the pixels forming said at least one compressed image, the neural network (12, 14) being designed to calculate a probability of presence of the feature(s) sought in said hyperspectral scene (3) from the at least one compressed image.

2. Device according to claim 1, wherein an output layer of the neural network comprises a convolution layer CONV(u), where u is greater than or equal to 1 and corresponds to the number of desired features.

3. A device for capturing an image (11) of a hyperspectral scene (3) and for detecting features in this three-dimensional hyperspectral scene (3) comprising a device according to any one of claims 1 to 2 and further comprising said acquisition system (4) of the at least one compressed image (11, 13) of the hyperspectral scene (3) in three dimensions.

4. Device according to claim 3, wherein at least one of said compressed images (11) is obtained by a sensor of the acquisition system comprising:

   - a first converging lens (21) configured to focus the information of a scene on an aperture (22); and
   - a collimator (23) configured to capture the rays passing through said opening (22) and to transmit these rays on a diffraction grating (24); and
   - a second converging lens (25) configured to focus the rays from the diffraction grating (24) on a pick-up surface (26).

5. Device according to one of claims 3 to 4, wherein at least one of said compressed images (13) is obtained by a sensor of the acquisition system comprising:

   - a first converging lens (41) configured to focus the information of a scene on a mask (42); and
   - a collimator (43) configured to capture beams passing through said mask (42) and to transmit these rays onto a prism (44); and
   - a second converging lens (45) configured to focus rays from the prism (44) onto a pick-up surface (46).

6. Device according to one of claims 3 to 5, wherein the compressed image (11) is obtained by a sensor of the acquisition system whose wavelength is:

   - between 0.001 nanometer and 10 nanometers; or.
   - between 10000 nanometers and 20000 nanometers; or
   - between 300 nanometers and 2000 nanometers.

7. Device according to any one of claims 1 to 6, wherein the convolutional neural network (12, 14) is designed to detect the one or more features sought in said hyperspectral scene (3) from said at least one compressed image (11 and 13) and at least one non-diffracted standard image (112, C) of the hyperspectral scene.

8. Device according to claim 7, wherein the neural network is designed to calculate a probability of presence of the one or more features sought in said hyperspectral scene (3) from said at least one compressed image (11 and 13) and said at least one non-diffracted standard image (12).

9. Device according to claim 7 or 8, wherein said convolutional neural network (14) is designed to take into account the offsets of the focal planes of the various image acquisition sensors (11, 12 and 13) , and integrate the homographic function to merge the information of the different sensors taking into account the parallax of the different images.

10. Device for capturing (2) an image (11) of a hyperspectral scene (3) and detecting (1) features in this three-dimensional hyperspectral scene (3) comprising a device according to one of any one of claims 8 to 9, and further comprising an acquisition system (2) of at least one non-diffracted standard image (12) of said hyperspectral scene (3).

11. Device according to claim 10, wherein at least one of said non-diffracted standard images (12) is obtained:

- by an infrared sensor of the acquisition system, and/or
- by a sensor whose wavelength is between 300 nanometers and 2000 nanometers of the acquisition system.

12. Device according to one of claims 10 to 11, wherein said at least one non-diffracted standard images (12) and said at least one compressed image (11 and 13) are obtained by a set of semi-transparent mirrors so as to capture the hyperspectral scene (3) on several sensors simultaneously.

13. A method for detecting (1) in real time features in a three-dimensional hyperspectral scene (3),

**characterized in that** a direct detection system (1) of features in said hyperspectral scene (3) integrating a convolutional neural network (12, 14) detects the one or more features sought in said hyperspectral scene (3) from at least one compressed two-dimensional image (11, 13) of the focal plane of the hyperspectral scene obtained from an acquisition system, and comprising at least one diffracted image of the three-dimensional scene, an input layer of the neural network being populated from pixels forming said at least one compressed image,
the neural network (12, 14) being designed to calculate a probability of presence of the feature(s) sought in said hyperspectral scene (3) from the at least one compressed image.

14. A computer program comprising instructions which, when the program is executed by a computer, cause the computer to implement the method of claim 13.

[Fig. 1]

FIG. 1

[Fig. 2]

FIG. 2

[Fig. 3]

FIG. 3

[Fig. 4]

FIG. 4

[Fig. 5]

FIG. 5

[Fig. 6]

FIG. 6

[Fig. 7]

FIG. 7

[Fig. 8]

Fusion par couches entièrement connectée

Image annotée

FIG. 8

# EP 3 714 399 B1

## RÉFÉRENCES CITÉES DANS LA DESCRIPTION

**Littérature non-brevet citée dans la description**

- Non-scanning imaging spectrometry. **DESCOUR, MICHAEL ROBERT**. thèse. The university of Arizona, 1994
- **D. KITTLE**. Compressive spectral imaging. *thèse*, 2010
- **NATHAN HAGEN** ; **MICHAEL W. KUDENOV**. Review of snapshot spectral imaging technologies. *Optical Engineering*, September 2013, vol. 52 (9)
- Multi-scale 3D deep convolutional neural network for hyperspectral image classification. **HE MINGYI et al.** 2017 IEEE International Conference on Image processing. IEEE, 17 September 2017, 3904-3908
- Deep feature extraction and classification of hyperspectral images based on Convolutional neural networks. **CHEN YUSHI et al.** IEEE transactions on Geoscience and remote sensing. IEEE Service Center, 01 October 2016, vol. 54, 6232-6251
- **QIANGQIANG YUAN et al.** hyperspectral image denoising employing a spatial-spectral deep residual convolutional neural network. *Cornell University Library*, 01 June 2018
- HSCNN : CNN-Based hyperspectral image recovery from spectrally undersampled projections. **XIONG ZHIWEI et al.** 2017 IEEE International Conference on Computer Vision Workshops (ICCVW. IEEE, 22 October 2017, 518-525
- Deep residual Convolutional Neural Network for Hyperspectral Image Super-resolution. **WANG CHEN et al.** International conference on financial cryptography and data security. Springer, 30 December 2017, 370-380
- **H. BOURLARD** ; **Y. KAMP. A**. auto-association by multilayer perceptrons and singular value decomposition. *Biological cybernetics*, 1988, vol. 59 (4), ISSN 0340-1200, 291-294
- **J. MARIA** ; **J. AMARO** ; **G. FALCAO** ; **L. A. ALEXANDRE**. Stacked Autoencoders Using Low-Power Accelerated Architectures for Object Recognition in Autonomous Systems. *Neural Processing Letters*, 2016, vol. 43 (2), 445-458
- Multimodal deep learning for robust rgb-d object recognition. In Intelligent Robots and Systems (IROS). **EITEL, A.** ; **SPRINGENBERG, J. T.** ; **SPINELLO, L.** ; **RIEDMILLER, M.** ; **BURGARD, W.** IEEE/RSJ International Conference on. IEEE, 2015, 681-687
- Multimodal deep learning for robust rgb-d object recognition. In Intelligent Robots and Systems (IROS). **EITEL, A.** ; **SPRINGENBERG, J. T.** ; **SPINELLO, L.** ; **RIEDMILLER, M.** ; **BURGARD, W.** IEEE/RSJ International Conference on. IEEE., 2015, 681-687
- Computed-tomography imaging spectrometer : experimental calibration and reconstruction results. *APPLIED OPTICS*, 1995, vol. 34 (22)
- Practical Spectral Photography. *Euro-graphics*, 2012, vol. 31 (2)
- **GONZALO R. ARCE** ; **DAVID J. BRADY** ; **LAWRENCE CARIN** ; **HENRY ARGUELLO** ; **DAVID S. KITTLE**. *Compressive Coded Aperture Spectral Imaging*